**Europäisches Patentamt**

**European Patent Office**

**Office européen des brevets**

(19)

(11) **EP 1 170 307 A1**

(12) **EUROPEAN PATENT APPLICATION**

(43) Date of publication:
**09.01.2002 Bulletin 2002/02**

(51) Int Cl.[7]: **C08F 10/06**, C08F 8/50,
C08J 3/28

(21) Application number: **00202348.9**

(22) Date of filing: **05.07.2000**

| | |
|---|---|
| (84) Designated Contracting States:<br>**AT BE CH CY DE DK ES FI FR GB GR IE IT LI LU MC NL PT SE**<br>Designated Extension States:<br>**AL LT LV MK RO SI** | (72) Inventors:<br>• **Dupire, Marc**<br> **7022 Mons (BE)**<br>• **Michel, Jacques**<br> **7181 Feluy (BE)**<br>• **Debras, Guy**<br> **6210 Frasnes-les-Gosselies (BE)** |
| (71) Applicant: **ATOFINA Research**<br>**7181 Seneffe (Feluy) (BE)** | |

(54) **Moulding of polyolefins having improved properties**

(57)  A process for moulding polyolefins having an enhanced crystallisation rate from the melt, the process comprising irradiating one or more polyolefins having a double bond concentration of at least 0.1 per 10,000 carbon atoms with an electron beam having an energy of at least 5 MeV and at a radiation dose of at least 5 kGray, and mechanically processing the irradiated one or more polyolefins in a melt to form long chain branches on the polyolefin molecules, and moulding the melt to form a solid article. A process for moulding polypropylene from the melt, the process comprising irradiating polypropylene which has been polymerised using a metallocene catalyst with an electron beam having an energy of at least 5 MeV and a radiation dose of at least 5 kGray, mechanically processing the irradiated polypropylene in a melt to form long chain branches on the polypropylene molecules, and moulding the melt to form a solid article.

**Description**

The present invention relates to a process for moulding polyolefins, in particular polypropylene, having improved properties, in particular an enhanced crystallisation rate from the melt. In particular, the present invention relates to a process for moulding polypropylene having an improved crystallisation rate by irradiating polypropylene with a high energy electron beam.

Polypropylene resin is used in a variety of different applications. However, polypropylene resin suffers from the problem of having a low crystallisation rate from the melt, which limits the productivity during the production cycle. The low crystallisation rate results in the requirement for relatively long moulding times when articles are moulded from polypropylene which is solidified from the melt, for example in injection moulding, blow moulding, blowing of films, extrusion thermoforming and in the production of foams.

When polypropylene is cooled from the melt, it begins to solidify at a temperature lower than the melting temperature (Tm), as soon as a minimum undercooling is reached. The degree of crystallinity of the solid is progressively increased as the temperature is lowered down to room temperature. A volume change, which is a negative volume change (shrinkage) on cooling, is associated with the cooling from the melting temperature. Accordingly, when polypropylene articles are moulded it is generally required not to remove the moulded articles from the mould until the crystallinity is high enough, otherwise the shape and dimensions of the final cooled article may not accurately reflect the desired moulded shape as a result of subsequent shrinkage or contraction of the moulded article on cooling. In order to achieve commercial acceptance, it is necessary for the moulding cycle to be as short as possible, which in turn requires a fast crystallisation rate of the polymer chains so that a sufficient crystallinity is rapidly achieved. A major drawback of some polypropylenes in particular syndiotactic polypropylene, is that such polypropylenes have a low crystallisation rate, consequently leading to slow demould times. These low crystallisation rates have in the prior art been accelerated by the use of nucleating agents to speed up the crystallisation of the molecules, leading to higher levels of crystallinity. Consequently, nucleators are particularly useful when an increase in stiffness, maximum permitted use temperature or optical properties are desired for the final applications. However, it is desirable to avoid the cost and inconvenience of such nucleating agents. When polypropylene is solidified from the melt, long polymer molecules have a low mobility in the melt and consequently tend to act as nucleating sites for crystalline regions as a result of there being greater order in the melt. Such points act as self nucleation sites for the formation of crystalline regions.

It is also known in the art to increase the melt strength of polypropylene, for example by irradiating the polypropylene with an electron beam. It is known that electron beam irradiation significantly modifies the structure of a polypropylene molecule. The irradiation of polypropylene results in chain scission and grafting (or branching) which can occur simultaneously. Up to a certain level of irradiation dose, it is possible to produce from a linear polypropylene molecule having been produced using a Ziegler-Natta catalyst, a modified polymer molecule having free-end long branches, otherwise known as long chain branching.

It is known that such long chain branching drastically modifies the rheological behaviour of the polypropylene, for example elongational and shear viscosity. It is further known that when irradiating isotactic polypropylene which has been produced using conventional Ziegler-Natta catalysts, the irradiation of the polypropylene with an electron beam produces free radicals and there is a competition between chain scission and branching which is in favour of chain scission. It is known to use branching agents, for example multi-vinylic compounds, to displace the equilibrium towards the achievement of branching. For example CA-A-2198651 discloses that bifunctional, unsaturated monomers can be added before and/or during the irradiation. Such compounds may include divinyl compounds, alkyl compounds, dienes or mixtures thereof. These bifunctional, unsaturated monomers can be polymerised with the help of free radicals during the irradiation.

The use of such branching (or grafting) agents leads to the disadvantages of increased cost and increased possibility of environmental problems, in particular toxicity, as a result of adding branching or grafting agent to the polypropylene.

It is also known to irradiate polypropylene copolymers of propylene and dienes, for example 1,5-hexadiene, after their polymerisation. The use of such copolymer complicates substantially the polymerisation procedure.

The present invention aims to provide a process for moulding polyolefin resins, in particular polypropylene resins, having improved properties, in particular improved moulding times.

Accordingly, the present invention provides a process for moulding polyolefins having an enhanced crystallisation rate from the melt, the process comprising irradiating one or more polyolefins having a double bond concentration of at least 0.1 per 10,000 carbon atoms with an electron beam having an energy of at least 5 MeV and at a radiation dose of at least 5 kGray, and mechanically processing the irradiated one or more polyolefins in a melt to form long chain branches on the polyolefin molecules, and moulding the melt to form a solid article.

The present invention also provides a process for moulding polypropylene from the melt, the process comprising irradiating polypropylene which has been polymerised using a metallocene catalyst with an electron beam having an energy of at least 5 MeV and a radiation dose of at least 5 kGray, mechanically processing the irradiated polypropylene in a melt to form long chain branches on the polypropylene molecules, and moulding the melt to form a solid article.

The present invention is predicated on the discovery by the present inventor that high irradiation energy electron beams reduce the crystallisation time of polyolefins, in particular polypropylene. This avoids the need for any nucleating agents for crystallisation of the polypropylene. In addition, the polyolefins can be irradiated without the need for a branching or grafting agent, thereby making irradiation more commercially useful and with reduced environmental or toxicity problems, when the polyolefin has a high concentration of chains with end vinyl groups (i.e. vinylidene groups), which are particularly present when the polyolefin, in particular polypropylene, is polymerised with a metallocene catalyst in the absence of hydrogen. The use of a metallocene catalyst promotes hydrogen β-elimination to form vinylidene end groups. The irradiation causes the formation of free radicals in the polyolefin chains. When the irradiated polymer is subsequently mechanically processed or worked, for example by extrusion, in the absence of a grafting or branching agent this causes recombination between free radicals and available terminal double loads, creating long chain branching without the need for a branching or grafting agent. As well as increasing the crystallisation rate, the melt strength of the polyolefins is also increased.

Without being bound by theory, it is believed that the increase in crystallisation rate is achieved by the formation of long chain branches on the polypropylene molecule. The long chain branches provide a greater degree of order in the melt, acting as enhanced self nucleation sites for the polypropylene. The long molecules formed by the irradiation process also promote enhanced crystallisation. The decrease in crystallisation time is progressively greater at increasing irradiation rates.

The polypropylene is produced using a metallocene catalyst which preferably has the following general formula:

$Cp_2MX_n$ where Cp is a substituted or unsubstituted cyclopenta dienyl group; M is a transition metal from Group IVB of the Periodic Table or vanadium; X is a halogen or a hydrocarbyl group having from 1-10 carbon atoms; and n is the valancy of the metal M minus 2. A typical metallocene catalyst is (n-butyl $Cp)_2ZrCl_2$ on a silica support with methyl aluminium oxane as a cocatalyst.

Preferably, the polypropylene is irradiated at an energy of at least 10 MeV.

The polypropylene may be an isotactic polypropylene, a syndiotactic polypropylene, or a blend of isotactic and syndiotactic polypropylene. Most particularly, the polyolefin comprises polypropylene which has been polymerised using a metallocene catalyst, in particular an isotactic polypropylene polymerised using a metallocene catalyst (hereinafter referred to as "miPP"). The polypropylene or polypropylene blend may have a monomodal molecular weight distribution or a multimodal molecular weight distribution, for example a bimodal molecular weight distribution.

The polypropylene may be a homopolymer of propylene or a random or block copolymer of propylene and one or more olefins selected from ethylene and $C_4$ to $C_{10}$ 1-olefins, which may be linear or branched. For example, the polypropylene may be an ethylene-propylene random copolymer containing up to 10 wt% ethylene. The polypropylene homopolymer may be used as a matrix phase which is toughened by rubber particles, for example ethylene-propylene rubber particles, typically in an amount of up to 30wt%.

In the irradiation process, typically the polyolefin such as the polypropylene is deposited onto a continuously moving conveyor such as an endless belt. The polyolefin on the conveyor passes under an electron beam generator which irradiates the polyolefin. Preferably, the accelerating potential or energy of the electron beam is from 5 to 100 MeV, still more preferably at least 10 MeV, yet more preferably from 10 to 25 MeV. The power of the electron beam generator is preferably from 50 to 500 kW more preferably for 120 to 250 kW. The radiation dose to which the polyolefin is subjected is preferably from 5 to 100 kGray, yet more preferably from 10 to 60 kGray, more preferably around 15 kGray (10 kGray is equivalent to 1 Mrad). The conveyor speed is adjusted in order to achieve the desired dose. Typically, the conveyor speed is from 0.5 to 20 metres/minute, preferably from 1 to 10 metres/minute, more preferably from 2.25 to 8.5 metres/minute.

As a result of the high irradiating potential of the electron beam, not only can the conveyor speed be significantly higher than in the prior art, but also the thickness of the continuously moving bed of polyolefin on the conveyor can be relatively high. Typically, the bed of polyolefin has a thickness of up to 20 cm, most particularly from 5 to 10 cm. The bed of polyolefin on the conveyor typically has a width of up to about 1 metre. Preferably, the irradiation is carried out under an inert atmosphere, such as nitrogen.

After irradiation by the electron beam, the polyolefin powder can be annealed and then treated with at least one known antioxidant additive. The annealing temperature may range from 50 to 150°C more preferably from 80 to 120°C and the annealing time may range from 1 to 60 minutes, more preferably from 5 to 30 minutes. Thereafter the polyolefin is mechanically processed, e.g. by extrusion, and granulated.

In accordance with a preferred aspect of the invention, as well as an enhanced crystallisation rate the irradiated polypropylene has increased melt strength. This particular rheological property provides an outstanding processing behaviour which allows the polypropylene based polymers produced in accordance with the invention to be suitable particularly for producing films, sheets, fibres, pipes, foams, hollow articles, panels and coatings. The irradiated polypropylene also has improved mechanical properties, such as flexural modulus and impact resistance, and improved rheological properties such as recovery compliance and relaxation time.

The invention will now be described in greater detail with reference to the following non-limiting examples and the accompanying drawings, in which:-

Figure 1 is a graph showing the relationship between crystallisation time and irradiation dose for polypropylenes produced in accordance with Examples 1 to 3 of the process of the invention and Comparative Example 1;

Figure 2 is graph showing the molecular distribution of the polypropylenes of Examples 1 to 3 and Comparative Example 1; and

Figure 3 is a graph showing, for Comparative Example 1, the molecular weight distribution of the polymer, and, for Examples 1 to 3, the high and low molecular weight fractions of the molecular weight distribution of the polymer produced as a result of the irradiation of the polymers.

EXAMPLES 1 TO 3 AND COMPARATIVE EXAMPLE 1

In these Examples and Comparative Example, an isotactic polypropylene was produced using a metallocene catalyst (thereby producing miPP representing metallocene-synthesised isotactic polypropylene) comprising methyl benzyl indenyl zirconium dichloride, the polymerisation having been performed without the addition of hydrogen gas during the polymerisation process. The reaction temperature was 65°C, the propylene throughput was around 60 kg/h, no hydrogen or comonomer was fed, and the isobutane feed was 4 kg/h. The resultant miPP had a melt flow index (MFI) of around 6 dg/min. In this specification, the melt flow index (MFI) is measured by the procedure of ASTM D 1238 using a load of 2.16kg at a temperature of 230°C for polypropylene.

The polypropylene was then subjected to electron beam irradiation. Prior to irradiation, the polypropylene fluff was stabilised with 200 ppm Irganox 1076. In particular, the polypropylene was deposited onto an endless belt conveyor having a speed of 2.2 to 8.8 m/minute. The polypropylene powder was deposited onto the conveyor as a bed having a thickness of 7 cm. The conveyor conveyed the bed under a high energy high power electron accelerator. Such accelerators are available in commerce. The accelerator had an energy of 10 MeV and a power of 120 kW. The polypropylene powder was divided into three samples for Examples 1 to 3 respectively and irradiated for a period of time (determined by the conveyor speed) sufficient to provide varying respective radiation doses of 15, 30 and 60 kGray for Examples 1 to 3. During the irradiation, the powder was maintained under argon (or nitrogen) to exclude oxygen.

After irradiation, the powder was kept under nitrogen and was mixed with conventional antioxidant additives comprising 500 ppm Irganox 3114, 1000 ppm Irgafos 168 and 400 ppm calcium stearate.

After the addition of the antioxidant additives, the powder was extruded and granulated at 220°C under an argon atmosphere.

The properties of the polypropylene of Examples 1 and 3 and Comparative Example 1 are shown in Table 1.

For each of the polypropylenes of Examples 1 to 3 and Comparative Example 1, the crystallisation time at 125°C was determined by obtaining by differential scanning calorimetry the time elapsed up to the maximum of the crystallisation exotherm $t_{max}$. In the differential scanning calorimetry, a differential scanning calorimeter available in the art under the trade name "Pyris 1" was calibrated at 20°C/minute for temperature and energy with indium, having a melting temperature of 156.6°C and a melting enthalpy of 28.45 J/g. Thereafter, a differential scanning calorimetry program was employed constituted by a period of 1 minute at a temperature of 25°C, then heating rapidly from 25°C to 220°C at a rate of 200°C per minute, and allowing a standardised isothermal melting at 220°C for a period of 5 minutes, then cooling rapidly at a rate of 200°C per minute to a temperature of 125°C. Thereafter the exotherm of crystallisation was recorded for a period of 30 minutes. The absolute values of $t_{max}$ strongly depend upon the calibration procedure and the differential scanning calimetry apparatus. Therefore, the ratio of $t_{max}$ should be considered as indicative of the enhanced crystallisation rate with irradiation for the isotactic polypropylene.

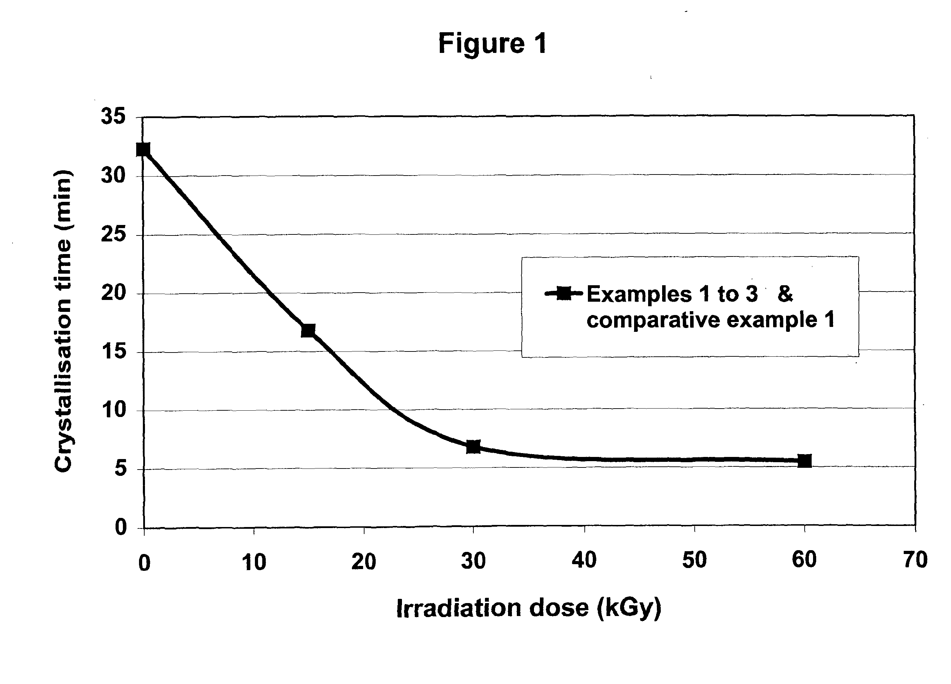

Figure 1 shows the relationship between crystallisation time at 125°C and irradiation rate for Examples 1 to 3 and Comparative Example 1. It may be seen that the crystallisation time significantly decreases with increasing irradiation rates. This results in a moulding method for the irradiated polypropylene which has significant advantages as a result of decreased crystallisation times, leading in turn to fast demould times.

The MFI of a sample of the initial non-irradiated miPP of Comparative Example 1 and the three samples of the miPP of Examples 1 to 3 having been irradiated at the three different radiation doses of 15,30 and 60 kGray were measured and the results are shown in Table 1. For Comparative Example 1 there was no irradiation (i.e. a zero irradiation dose). The MFI values for radiation doses of 0, 15, 30 and 60 kGray were, respectively, 5.8, 7.9, 9 and 17.9 g/10min. For the miPP, it may be seen that the irradiation dose does not influence the MFI to a significant extent.

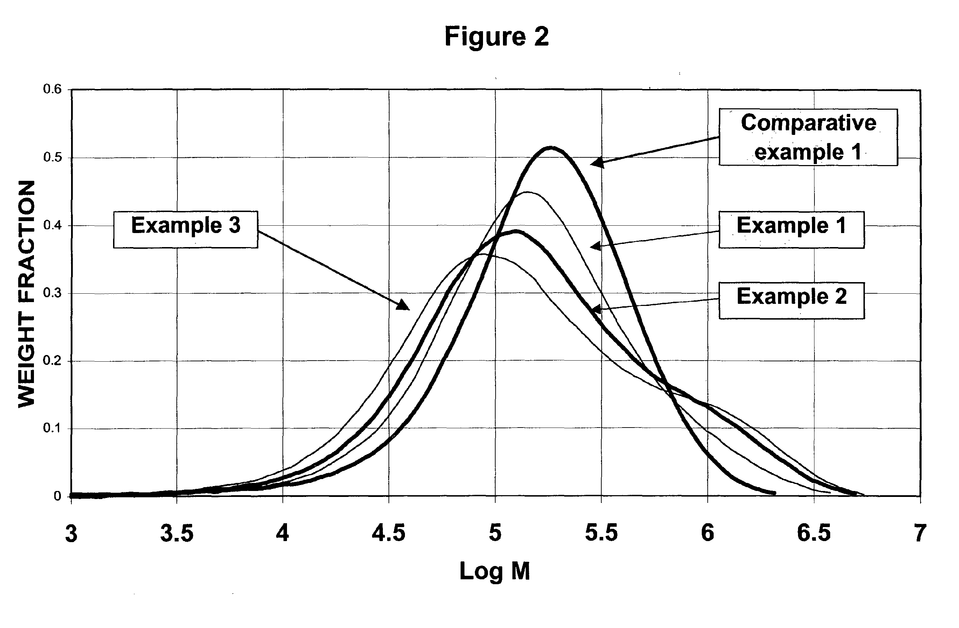

In addition, for the four samples, namely the unirradiated sample of Comparative Example 1 and the three irradiated samples of Examples 1 to 3, the molecular weight distribution was determined by gel permeation chromatography and the results are summarised in Table 1 and Figure 2.

From Figure 2 it may be seen that the irradiation causes a shifting of the molecular weight at the peak (Mp) to the lower molecular weight side with increasing irradiation dose, leading to a decrease in the Mn at increasing irradiation dose. Moreover, a second peak in the molecular weight distribution on the high molecular weight side progressively appears in the high molecular weight region with increasing irradiation dose, leading to a bimodal molecular weight distribution for the irradiated miPP at higher irradiation doses. This increases the weight average molecular weight (Mw) and third order average molecular weight (Mz) with increasing irradiation dose. Thus the higher irradiation dose causes the formation of large molecules giving a second peak in the high molecular weight end of the molecular weight distribution.

It is believed that two actions occur simultaneously as a result of the irradiation. Chain scission which is represented by the low molecular weight peak causes shifting of the peak towards lower molecular weight as the irradiation dose increases. The width of the low molecular weight peak is slightly decreased by the irradiation. In addition, the formation of long chain branching leads to the appearance of a high molecular weight peak which extends towards the lower molecular weight side. For the four curves shown in Figure 2, the dispersion index D increases from 2.7 for the unirradiated polypropylene of Comparative Example 1 to dispersion indexes of 3.4, 4.2 and 5.2 for the respective radiation doses of 15, 30 and 60 kGray for Examples 1 to 3. Thus for the miPP, the irradiation cuts the polymer chain but at the same time permits more recombination to form branched polymers having a high molecular weight at increasing irradiation doses.

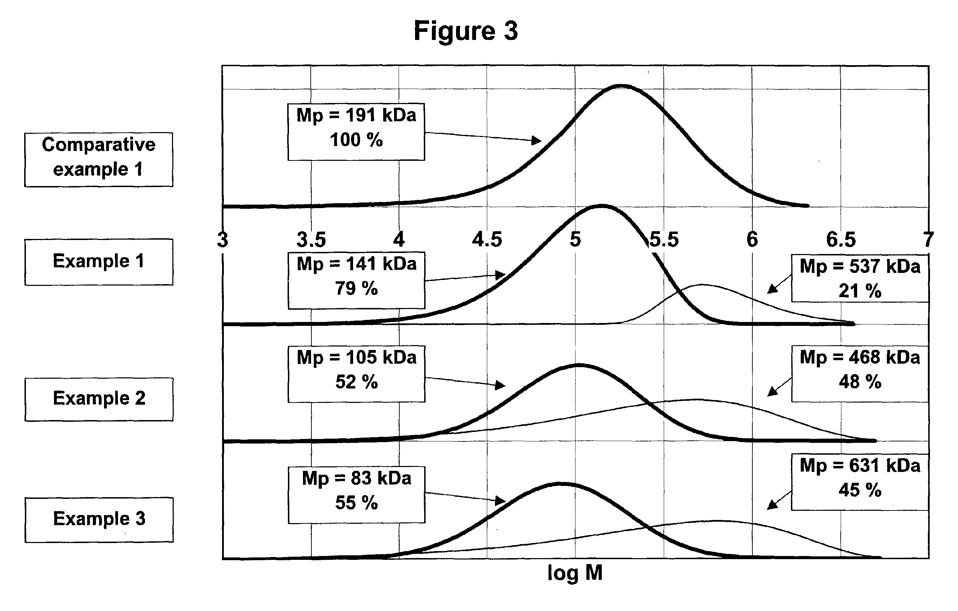

Figure 3 shows the variation in molecular weight distribution for increasing the radiation doses for the four molecular weight distribution curves shown in Figure 2 showing the separate contributions to the molecular weight distribution as a result of chain scission and long chain branching. Thus for the miPP, it may be seen that the irradiation causes polymer scission but allows recombination of the branched polymers to yield a higher molecular weight.

It is known that a strong increase of melt viscosity ($\eta$) at low frequency is observed for polypropylene containing long chain branching structures. The relationship between the shear viscosity of the polypropylene melt as a function of circular frequency is dependent upon the degree of long chain branching.

In order to quantify the amount of long chain branching in isotactic polypropylene, the applicant has formulated a parameter, referred to herein as the branching factor g, which is determined from the rheological properties of the polymer. The long chain branching factor g was established by the ratio Mw (COP)/Mw ($\eta$0) where Mw (COP) is the weight average molecular weight at the crossover point coordinates ($W_c$ and $G_c$) (as discussed hereinbelow) and Mw ($\eta$0) is the weight average molecular weight at zero shear viscosity. The branching factor is equal to $1 \pm 0.05$ for linear isotactic polypropylene and is less than 1 for isotactic polypropylene with long chain branching. The branching factor g is determined from the ratio of two weight average molecular weight ($M_w$) values inferred from a dynamic frequency sweep on a viscoelastimeter such as the models available in commerce under the trade names RDA 700 or ARES 700 from the company Rheometrics Scientifics.

The branching factor is determined as follows. For the viscoelastimeter available from Rheometrics Scientifics under the trade name ARES, the operating conditions were set up as follows: the strain was set up to be from 10 to 20%, i.e. in the linear viscoelastic range; the frequency sweep was from 0.1 to 500 radians/second; the plate-plate geometry was 25mm diameter, with a polymer thickness therebetween of typically around 2mm. In some instances, the same testing experiment was conducted at different melt temperatures, for example at 190°C and 210°C, and the viscoelastic responses expressed at the reference temperature of 230°C using a master curve approach, which is described in the paper entitled "Temperature dependence of polyolefin melt rheology", H. Mavridis and R.N. Shroff, Polymer Eng. Sci. 32, 1778 (1992).

From the data obtained, the storage (G') and loss (G") shear moduli, as well as the complex shear melt viscosity ($\eta$*) were plotted as a function of circular frequency at the reference temperature of 230°C. A cross-over point (COP) for the storage and loss shear moduli was observed for all the isotactic polypropylenes investigated. The cross-over point (COP) coordinates G' = G" = $G_c$ and the corresponding circular frequency $W_c$ can be used to infer information pertaining to the weight average molecular weight $M_w$ and its polydispersity as first proposed in the paper by G.R. Zeichner and P.D. Patel, Proc. 2nd World Cong. Chem. Eng. 6, 333 (1981).

The applicants tested 33 linear isotactic polypropylenes with $M_w$ values ranging from 70 kDa to 1200 kDa and polydispersity index ($D = M_w/M_n$) values of from 2 to 25 and found the following equation for the molecular weight at the cross-over point to apply:

$$M_w \text{ (COP)} = \exp(6.767 - 0.187*(LnWc) - 0.0129*(LnWc)^2)$$

The weight average molecular weight (Mw) is specified in kDa, and is calculated with a standard deviation estimated to be around 5%.

For the value $M_w$ ($\eta 0$) which is the weight average molecular weight at zero shear viscosity, this is calculated as follows. From the shear viscosity curve, it is possible to extrapolate the viscosity to the zero shear rate viscosity using an equation known as the Carreau-Yasuda equation which is described in the paper entitled "Correlation Between Molecular Structure and Rheological Behaviour of Polypropylene", K. Bernreitner, W. Neissl and M. Gahleitner, Polymer Testing, 11, 89 (1992). As is well known in the literature, a power law relationship exists between $\eta_0$ and $M_w$. Accordingly, using the same data as set out for the cross-over point, the following equation for the weight average molecular weight at zero shear viscosity has been determined:

$$M_w (\eta 0) = \exp (3.5897 + 0.267 \cdot Ln(\eta_0)).$$

The weight average molecular weight $M_w$ is expressed in kDa with a standard deviation around 6%. The viscosity is expressed in Pascal. seconds.

The branching factor g for any given isotactic polypropylene is the ratio between the calculated value and $M_w$ (COP)/$M_w(\eta_0)$.

For the four samples, the branching factor and the irradiation dose is shown in Table 1. It may be seen that the degree of long chain branch increases, as represented by decreasing branching factor g, with increasing irradiation dose.

Table 1 shows the activation energy for Comparative Example 1 and Examples 1 to 3. The activation energy represents the energy necessary to activate the molecule to move in the melt. It may be seen that with increasing irradiation dose, the activation energy increases. This indicates that long chain branching increases with increasing irradiation dose, since this is manifested in the increased activation energy.

The polypropylene was injection moulded at 210°C in a mould kept at 40°C to form elongate bars for testing of the flexural Young's modulus in accordance with ISO standards (8cm x 1cm x 0.4cm). Table 1 shows that for miPP the flexural Young's modulus increases, comparing Example 3 and Comparative Example 1, as a result of the irradiation. The irradiation has the same effect as a crystallisation nucleating agent. The flexural Young's modulus (between a strain of 0.05 to 0.25%) of Example 3 was higher than that of a nucleated miPP having the same MFI but not irradiated (1490 MPa).

The irradiation was found not to increase the IZOD impact strength of the miPP.

## TABLE 1

| Polymer | miPP | | | |
| --- | --- | --- | --- | --- |
| | Comparative Example 1 | Example 1 | Example 2 | Example 3 |
| Irradiation dose(kGray) | 0 | 15 | 30 | 60 |
| MFI (dg/min) | 5.8 | 7.9 | 9 | 17.9 |
| Mn (kDa) | 82.8 | 71.8 | 69.3 | 57.3 |
| Mw (kDa) | 227 | 246 | 289 | 299 |
| Mz (kDa) | 426 | 695 | 989 | 1160 |
| D | 2.7 | 3.4 | 4.2 | 5.2 |
| D' | 1.9 | 2.8 | 3.4 | 3.9 |
| Branching factor g | 1.04 | 0.8 | 0.72 | 0.64 |
| Crystallisation time @ 125°C (min) | 32.3 | 16.8 | 6.8 | 5.5 |
| Ea (kJ/mole) | 36 | 55.2 | 56.3 | 72.9 |
| Young's modulus (mPa) | 1363 | - | - | 1713 |

**Claims**

1. A process for moulding polyolefins having an enhanced crystallisation rate from the melt, the process comprising irradiating one or more polyolefins having a double bond concentration of at least 0.1 per 10,000 carbon atoms with an electron beam having an energy of at least 5 MeV and at a radiation dose of at least 5 kGray, and mechanically processing the irradiated one or more polyolefins in a melt to form long chain branches on the polyolefin molecules, and moulding the melt to form a solid article.

2. A process according to claim 1 wherein the one or more polyolefins comprise polypropylene which has been polymerised using a single site catalyst.

3. A process according to claim 1 or claim 2 wherein the electron beam has an energy of at least 10 MeV.

4. A process according to any one of claims 1 to 3 wherein the power of the electron beam is from 50 to 500 kW.

5. A process according to any foregoing claim wherein the radiation dose is at least 10 kGray.

6. A process according to any foregoing claim wherein in the moulding step the polyolefin is solidified in the absence of a crystallisation nucleating agent.

7. A process for moulding polypropylene from the melt, the process comprising irradiating polypropylene which has been polymerised using a metallocene catalyst with an electron beam having an energy of at least 5 MeV and a radiation dose of at least 5 kGray, mechanically processing the irradiated polypropylene in a melt to form long chain branches on the polypropylene molecules, and moulding the melt to form a solid article.

8. A process according to claim 7 wherein the electron beam has an energy of at least 10 MeV.

9. A process according to claim 7 or claim 8 wherein the power of the electron beam is from 50 to 500 kW.

10. A process according to any one of claims 7 to 9 wherein the radiation dose is at least 10 kGray.

11. A process according to any one of claims 7 to 10 wherein in the moulding step the polypropylene is solidified in the absence of a crystallisation nucleating agent.

Figure 1

EP 1 170 307 A1

## Figure 2

EP 1 170 307 A1

# Figure 3

Comparative example 1 — Mp = 191 kDa, 100 %

Example 1 — Mp = 141 kDa, 79 %; Mp = 537 kDa, 21 %

Example 2 — Mp = 105 kDa, 52 %; Mp = 468 kDa, 48 %

Example 3 — Mp = 83 kDa, 55 %; Mp = 631 kDa, 45 %

log M

EP 1 170 307 A1

European Patent Office

**EUROPEAN SEARCH REPORT**

Application Number

EP 00 20 2348

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | EP 0 678 527 A (CHISSO CORP ;JAPAN ATOMIC ENERGY RES INST (JP)) 25 October 1995 (1995-10-25) * page 3, line 11 - line 53 * * page 4, line 43 - line 44 * * page 5, line 10 - line 56; claims * | 1-11 | C08F10/06 C08F8/50 C08J3/28 |
| X | WO 97 08216 A (EXXON CHEMICAL PATENTS INC) 6 March 1997 (1997-03-06) * page 15, line 22 - page 18, line 3; claims; examples 28-33 * | 1-11 | |
| A | EP 0 634 441 A (HIMONT INC) 18 January 1995 (1995-01-18) | 1-6 | |
| X | * page 2, line 25 - page 6, line 55; claims; examples * | 7-11 | |
| A | EP 0 799 839 A (MONTELL NORTH AMERICA INC) 8 October 1997 (1997-10-08) | 1-6 | |
| X | * page 3, line 50 - page 5, line 58; claims; example 11; tables * | 7-11 | TECHNICAL FIELDS SEARCHED (Int.Cl.7) |
| A | EP 0 451 804 A (MITSUI TOATSU CHEMICALS) 16 October 1991 (1991-10-16) | 1-6 | C08J C08F |
| X | * page 2, line 55 - page 4, line 4 * * page 6, line 32 - line 36; claims * | 7-11 | |
| A | EP 0 351 866 A (HIMONT INC) 24 January 1990 (1990-01-24) | 1-6 | |
| X | * column 4, line 12 - line 36 * * column 5, line 22 - line 25 * * column 13, line 45 - column 14, line 13; claims * | 7-11 | |

The present search report has been drawn up for all claims

| Place of search | Date of completion of the search | Examiner |
|---|---|---|
| THE HAGUE | 13 November 2000 | Kaumann, E |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

12

**ANNEX TO THE EUROPEAN SEARCH REPORT
ON EUROPEAN PATENT APPLICATION NO.** EP 00 20 2348

This annex lists the patent family members relating to the patent documents cited in the above–mentioned European search report.
The members are as contained in the European Patent Office EDP file on
The European Patent Office is in no way liable for these particulars which are merely given for the purpose of information.

13-11-2000

| Patent document cited in search report | | Publication date | Patent family member(s) | | Publication date |
|---|---|---|---|---|---|
| EP 0678527 | A | 25-10-1995 | JP | 7292024 A | 07-11-1995 |
| | | | DE | 69503422 D | 20-08-1998 |
| | | | DE | 69503422 T | 11-02-1999 |
| | | | US | 5560886 A | 01-10-1996 |
| WO 9708216 | A | 06-03-1997 | US | 5670595 A | 23-09-1997 |
| | | | CA | 2226947 A | 06-03-1997 |
| | | | EP | 0847408 A | 17-06-1998 |
| | | | EP | 0942017 A | 15-09-1999 |
| | | | JP | 11511499 T | 05-10-1999 |
| | | | PL | 325286 A | 20-07-1998 |
| EP 0634441 | A | 18-01-1995 | US | 5414027 A | 09-05-1995 |
| | | | AT | 166368 T | 15-06-1998 |
| | | | CA | 2128064 A | 16-01-1995 |
| | | | CN | 1105033 A | 12-07-1995 |
| | | | DE | 69410357 D | 25-06-1998 |
| | | | DE | 69410357 T | 08-10-1998 |
| | | | JP | 7138430 A | 30-05-1995 |
| | | | MX | 9405377 A | 31-01-1995 |
| | | | US | 5541236 A | 30-07-1996 |
| | | | US | 5605936 A | 25-02-1997 |
| EP 0799839 | A | 08-10-1997 | US | 5820981 A | 13-10-1998 |
| | | | AU | 712170 B | 28-10-1999 |
| | | | AU | 1664497 A | 11-12-1997 |
| | | | BR | 9701616 A | 03-11-1998 |
| | | | CA | 2201436 A | 02-10-1997 |
| | | | CN | 1168386 A | 24-12-1997 |
| | | | EP | 0980877 A | 23-02-2000 |
| | | | JP | 10036451 A | 10-02-1998 |
| | | | NO | 971481 A | 03-10-1997 |
| | | | US | 5804304 A | 08-09-1998 |
| EP 0451804 | A | 16-10-1991 | CA | 2040226 C | 02-05-1995 |
| | | | CN | 1056501 A,B | 27-11-1991 |
| | | | DE | 69129999 D | 24-09-1998 |
| | | | DE | 69129999 T | 04-02-1999 |
| | | | JP | 3025044 B | 27-03-2000 |
| | | | JP | 4218504 A | 10-08-1992 |
| | | | KR | 9311664 B | 16-12-1993 |
| | | | US | 5200439 A | 06-04-1993 |
| EP 0351866 | A | 24-01-1990 | US | 5047446 A | 10-09-1991 |
| | | | AT | 147762 T | 15-02-1997 |
| | | | AU | 620880 B | 27-02-1992 |

EPO FORM P0459

For more details about this annex : see Official Journal of the European Patent Office, No. 12/82

## ANNEX TO THE EUROPEAN SEARCH REPORT
## ON EUROPEAN PATENT APPLICATION NO.

EP 00 20 2348

This annex lists the patent family members relating to the patent documents cited in the above-mentioned European search report.
The members are as contained in the European Patent Office EDP file on
The European Patent Office is in no way liable for these particulars which are merely given for the purpose of information.

13-11-2000

| Patent document cited in search report | Publication date | Patent family member(s) | | Publication date |
|---|---|---|---|---|
| EP 0351866 A | | AU | 3677689 A | 08-03-1990 |
| | | BR | 8903636 A | 13-03-1990 |
| | | CA | 1325864 A | 04-01-1994 |
| | | CN | 1039817 A,B | 21-02-1990 |
| | | DE | 68927653 D | 27-02-1997 |
| | | DE | 68927653 T | 12-06-1997 |
| | | FI | 893490 A | 23-01-1990 |
| | | JP | 2069533 A | 08-03-1990 |
| | | JP | 2655915 B | 24-09-1997 |
| | | KR | 133685 B | 21-04-1998 |
| | | MX | 170695 B | 07-09-1993 |
| | | NO | 892726 A,B, | 23-01-1990 |
| | | PT | 91234 A,B | 08-02-1990 |
| | | ZA | 8904688 A | 28-03-1990 |